# EUROPEAN PATENT APPLICATION

(11) **EP 1 125 978 A1**
(43) Date of publication of application: **22.08.2001**
(21) Application number: 01200591.4
(22) Date of filing: 19.02.2001
(51) Int. Cl.: C08L 21/02, C08K 3/34, C08F 2/44

(54) **A latex rubber product and a method for preparing same**

(30) Priority: 18.02.2000 IE 000139
(71) Applicant: Somerville Roberts, Peter, Delganey, County Wicklow (IE)
(72) Inventor: Somerville Roberts, Peter, Delganey, County Wicklow (IE)
(74) Representative: Casey, Lindsay Joseph

(57) **Abstract**

The present invention provides a method for producing an improved latex rubber product. The method involves the formation of an aqueous bentonite dispersion, preferably by providing an aqueous electrolytic solution and subsequently adding bentonite to the solution to form a concentrated aqueous bentonite dispersion, and the subsequent formation of a latex/bentonite compound containing the aqueous bentonite dispersion, and finally drying the latex/bentonite compound to form the improved latex rubber.

The present invention also provides a latex rubber product including 0.5% to 40% (by weight) bentonite.

## Description

The present invention relates to a natural or synthetic latex rubber product and a method for preparing same by mixing a latex compound with an aqueous bentonite dispersion.

The term "latex rubber product" as used herein is intended to encompass any conventional product capable of being formed from latex, for example products formed by casting, moulding, dipping, coating; for example toys, surgical gloves, carpet backings, etc.

The term "latex compound" as used herein is intended to mean an emulsion consisting substantially of latex mixed with water as a medium, but may also include additional ingredients such as bulking agents, fixing agents, adhesives, dyes and plasticisers, such latex compounds requiring heating to remove moisture and ensure effective adhesion.

The volcanic clay Montmorillonite, also known as bentonite, is incidentally present in conventional latex compounds, as a viscosity increasing agent in powder dispersions included in such latex compounds.
In order to enable the latex compound to be processed with maximum efficiency and to impart beneficial properties to the final latex rubber product, various powders, such as antioxidants, accelerators, etc, are added, in dispersion form, to the latex compound. Such powder dispersions contain a small proportion of bentonite to increase viscosity and, thereby, to prevent sedimentation of such powders. Normally the total amount of bentonite incorporated with the latex compound in this way does not influence the properties of the finished latex rubber product, being in the order of 0.02% by weight with respect to the total weight of the latex compound, or 0.04% by weight with respect to the total weight of the dry rubber.

Due to the viscosity of a bentonite dispersion, such dispersions for any application, have a maximum concentration of 3-5% bentonite by weight, after which the viscosity becomes too high for processing purposes.

It is also known, in an unrelated field of technology, to disperse bentonite in an aqueous electrolytic solution. This reduces the viscosity of the dispersion; monovalent cations being mildly active in causing flocculation, divalent more so, and trivalent and polyvalent even more so.

Surprisingly, and in contrast with the teachings of the prior art in the present field of technology, the present invention, in one aspect, concerns all but destroying the viscosity of an aqueous bentonite dispersion by pre-treatment with electrolytes, thus allowing higher concentrations of bentonite to be added without the associated high viscosity.

The present invention also concerns an improved latex rubber product containing at least 0.5% (by weight) bentonite.

According to a first aspect of the present invention there is provided a method for the production of a latex rubber product containing at least 0.5% (by weight) bentonite, the method comprising the steps of;
i) forming an aqueous bentonite electrolytic dispersion by adding bentonite to an aqueous electrolytic solution to form a concentrated aqueous bentonite dispersion of an appreciably lower viscosity than a conventional bentonite dispersion;
ii) mixing a latex compound with the aqueous bentonite dispersion, to form a latex/bentonite compound; and
iii) drying the latex/bentonite compound to form said latex rubber product.

Step i) of the method of the first aspect of the invention allows for the lowering of the viscosity of the aqueous bentonite dispersion, thereby facilitating the addition of large amounts of said bentonite dispersion into a latex compound, said latex compound being derived from either natural latex (Hevea Brasiliensis) or a synthetic latex.

As already mentioned, it will be appreciated that bentonite is mainly used as a viscosity increasing agent in the present field of technology. The invention, in its first aspect, concerns destroying the viscosity-increasing properties for which bentonite is normally used. This is achieved by dispersing bentonite in an electrolytic solution. The electrolyte of the electrolytic solution may be monovalent, divalent, trivalent or polyvalent, of which divalent, trivalent and polyvalent electrolytes are preferred. Most preferred electrolytes are aluminium potassium sulphate and calcium sulphate at concentrations of 0.1-0.4% by weight and 0.15-0.55% by weight, respectively. It will of course be appreciated that the electrolyte must be compatible with the remaining constituents of the bentonite electrolytic dispersion so that the choice of electrolyte(s) and it's/their concentrations is dictated solely by the requirement that the electrolyte(s) must be capable of reducing the viscosity of the bentonite electrolytic dispersion so as to allow sufficient bentonite to be incorporated into the final latex rubber product.

It is postulated that it is the particle size of bentonite treated in accordance with the first or second aspects of the invention, which imparts desired and beneficial properties to the latex rubber product produced in accordance with the first or second aspects of the invention. Thus it is preferable that between 10% (by weight) and 90% (by weight), most preferably about 70% (by weight), of bentonite so treated has a particle size of less than about 0.5 microns.

Preferably, the aqueous bentonite dispersion contains 5-40% (by weight), more preferably 10-25% (by weight) bentonite, advantageously about 15-20%.

According to a second aspect of the invention, there is provided a method for the production of a latex rubber product containing at least 0.5% by weight bentonite, the method comprising mixing a latex compound with a bentonite dispersion, to form a latex/bentonite compound; and drying the latex/bentonite compound to form said latex rubber product.

Preferably, the bentonite dispersion contains 0.5-5% (by weight), more preferably 3-5% (by weight) bentonite.

More preferably, the bentonite dispersion is added in the method of the first or second aspect of the invention to the latex compound. Alternatively, in the case of synthetic latices, the bentonite dispersion is added to the latex compound in the form of a monomer emulsion before, during, or after polymerisation.

It will be appreciated that the method of the first aspect of the invention facilitates the introduction of bentonite to a latex rubber product and that 0.5-40% by weight bentonite can readily be achieved in the finished latex rubber product.

It will also be appreciated that the method of the second aspect of the invention is less preferred - the viscosity of a bentonite dispersion containing more than 3-5% bentonite is too high to process effectively and so, instead, it is necessary to introduce large volumes of a 3-5% bentonite dispersion in order to achieve the desired quantity of bentonite - 0.5-40% by weight - in the finished latex rubber product. The amount of water involved requires greatly increased evaporation times and is, therefore, less preferred on practical and economic grounds.

There is provided an improved latex rubber product containing at least 0.5% by weight bentonite, whenever produced by a method set out in a first or second aspect of the present invention.

According to a third aspect of the present invention there is provided use of an aqueous bentonite dispersion to produce a latex rubber product containing between 0.5% and 40% (by weight) bentonite.

According to a fourth aspect of the present invention there is provided a latex rubber product including 0.5% to 40% (by weight) bentonite.

The term "room temperature" as used herein is intended to mean a temperature of between 15°C and 25°C.

The term "room pressure" as used herein is intended to define a pressure of between 95 kPa and 110 kPa.

The present invention will now be described by way of example.

### Example 1

Bentonite is supplied in a powder or fine pellet-size form from Volclay Limited, Birkenhead, Cheshire, United Kingdom. The aqueous bentonite electrolytic dispersion contains, gravimetrically, 84.38 parts by weight (% by weight) water, 0.28 parts by weight alum (aluminium potassium sulphate), 0.45 by weight parts anhydrous calcium sulphate, and 14.89 parts by weight bentonite. This produces a 14.89% (w/w) bentonite dispersion (hereinafter described as a "15%" (w/w) bentonite dispersion).

The alum and calcium sulphate are dissolved in the water at room temperature and room pressure, the solution being stirred continually for thirty minutes to ensure that the larger powder particles are completely dissolved.

The bentonite is then added slowly, again at room temperature and room pressure, while stirring to prevent the formation of large globules of unwetted bentonite on the surface, these being dispersed, where formed, with adequate stirring. The bentonite dispersion is stirred for thirty minutes to ensure complete hydration of the bentonite. The resulting bentonite electrolytic dispersion, which has a relatively low viscosity (e.g. thin cream) and a pH of 6.5, is suitable for adding to the suitably stabilised latex compound.

The bentonite dispersion (18 volumes) is added slowly to a latex compound (27 volumes), stirring for thirty minutes to facilitate complete dispersion of the bentonite through the latex compound. Thus, in the present example, the bentonite electrolytic dispersion comprises 40% (by volume) of the latex/bentonite compound. However, the amount used will, of course, depend on the properties required from the latex rubber product.

The latex/bentonite compound is then dried by any conventional evaporative process. The evaporative process will vary according to the latex rubber product being produced. With dipped goods, the former and its wet deposit are placed in a jacketed autoclave, with the temperature controlled by steam input into the outer jacket. If the latex is applied to continuous lengths of fabric, (by licking roller, doctor blade or spraying), for surface coating or combining, the spread fabric is passed through a drying oven or over a rotating drying drum. Heat is applied by any conventional means. If the latex/bentonite compound is to be used for moulded articles or very thick dipped products, it is first converted into a thermo-sensitive compound, which is set and dried by the application of a current of warm air at the necessary temperature.

The method of the first and second aspects of the present invention facilitates increasing the concentration of the bentonite in the latex rubber product, upon completion of drying, to the required dry rubber level. By experiment it has been found that between 0.5%-40% (by weight) bentonite in a dry latex rubber product, more preferably between 15%-30% (by weight), most preferably 20-30% (by weight), effects an appreciable change in the properties of the latex rubber product. Specifically, the addition of 0.5%-40% (by weight) bentonite into the latex rubber product beneficially modifies the latex rubber product. For example, for some purposes the latex rubber product must be very soft which creates the disadvantage of a tacky surface. Such surface tack may be so pronounced that, on bringing such surfaces into contact, they adhere together so strongly that they cannot be separated. However, when bentonite is added to the latex compound according to the method of the first and second aspects of the present invention, the surface tack is reduced to a significant extent without significantly reducing the softness of the rubber. Other changes include a substantial increase in the latex rubber product's abrasive resistance, adhesive strength, tear strength, water resistance and various other advantageous properties.

### Example 2

The latex compound used in the present Example is 47B0, a carboxylated butadiene acrylonitrile polymer in water, manufactured by Synthomer Ltd., Harlow, Essex.

The composition of the bentonite dispersion added to the latex compound in the present Example is:

| | |
|---|---|
| Water | 225 parts by weight |
| Alum (aluminium potassium sulphate) | 0.34 parts by weight |
| Anhydrous calcium sulphate | 0.50 parts by weight |
| Bentonite | 40 parts by weight |

The quantities of the bentonite dispersion, and the quantity of the latex compound, mixed to form the latex/bentonite compound for the present Example are:

| | |
|---|---|
| Bentonite dispersion | 87 parts by weight |
| Latex compound (wet) | 200 parts by weight |

To illustrate the improved properties of the latex rubber product produced in accordance with the present invention, various tests were carried out, the results of which are as follows:

| **Tensile Strength Test** | | |
|---|---|---|
| | **Latex Compound Content** | **Mean Tensile Strength** |
| Latex compound | 100% | 2.226 MPa |
| only (comparative) | | |
| Latex + Bentonite | 87% | 3.314 MPa |

Therefore, although the latex rubber product of Example 2 contains 13% less latex compound, there was an increase in tensile strength of 49%.

The latex rubber product of the present invention has a mean tensile strength of greater 2.25 MPa, preferably greater than 2.5 MPa, most preferably greater than 3 MPa.

When a carpet is tufted, each tuft of pile is merely a loop onto a substrate, which can be easily pulled out. The tufts may be held in place by applying a "backing" of latex and other materials which, on drying, holds the tufts in place. The degree of "pull" to remove the tuft is defined as the "tuft bind".

| **Tuft Bind Test** | | |
|---|---|---|
| | **Latex Compound Content** | **Average Tuft Bind** |
| Latex compound | 100% | 1.55 Kg |
| only (comparative) | | |
| Latex + KO₂ | 100% (approx) | 1.95 Kg |
| (comparative) | | |
| Latex + Bentonite | 85% | 2.04 Kg |

For the tuft bind test, the pure latex compound was found to have a surface tension substantially greater than that of the latex/bentonite compound, and therefore required the addition of a wetting agent, in this case KO₂, although at a negligible amount in order to provide the latex compound with a comparable surface tension to that of the latex/bentonite compound. A more relevant comparison for the tuft bind test is therefore, between the latex/KO₂ compound and the latex/bentonite compound. In this case, although the rubber product contained 15% less latex compound, an increase in tuft bind of almost 5% was achieved.

The latex rubber product of present invention has an average tuft bind of greater than 1.95 kg, preferably greater than 2.00 kg, most preferably greater than 2.03 kg.

### Example 3

In the following test, the latex compound used was XB 99072, manufactured by Sythomer Ltd. of Harlow, Essex.

This test was carried out to determine the tuft bind properties of carpet on application of either a latex/bentonite compound or pure latex compound, the results of which are as follows:

| **Mixes used** | | | | |
|---|---|---|---|---|
| | **Latex compound only** | | **Latex Compound + Bentonite** | |
| | **Wet** | **Dry** | **Wet** | **Dry** |
| Latex compound | 100 | 40 | 60 | 30 |
| Bentonite disp. | - | - | 40 | 6 |
| (As in Example 2) | | | | |
| Total | 100 | 40 | 100 | 36 |

| **Application to the Carpet** | | | | |
|---|---|---|---|---|
| Total Weight | 264 | 106 | 324 | 106 |
| applied (g/m²) | | | | |
| Latex compound | 264 | 106 | 162 | 88 |
| applied (g/m²) | | | | |

| **Tuft Bind Test Results** | | | |
|---|---|---|---|
| | **Lowest** | **Highest** | **Mean** |
| Latex Compound (kg) | .4 | .7 | .6 |
| Latex Compound + | .8 | 1.5 | 1.07 |
| Bentonite (kg) | | | |

Although the latex rubber product of the present Example as applied to the carpet contained 17% less latex compound (88 g/m² vs 106 g/m²), there was an increase in tuft bind of 78%.

The latex rubber product of the present invention has a mean tuft bind of greater than 0.7 kg, preferably greater than 0.9 kg, most preferably greater than 1.0 kg.

It will therefore be appreciated, from the test results of Examples 1-3, that more of the conventional fillers, such as clay or calcium carbonate, may be added to the latex rubber product, thereby reducing the cost of the final product, without significant deterioration of its original properties.

### Example 4

High amounts of bentonite may also be added using high volumes of a substantially lower concentration non-electrolytically-pre-treated (or unprocessed) bentonite dispersion (according to the second aspect of the present invention).

The following example compares the first and second aspects of the present invention (processed vs unprocessed bentonite, respectively):

| | **Processed Bentonite** | **Unprocessed Bentonite** |
|---|---|---|
| Latex compound (50% total | 27 | 27 |
| solids) | | |
| 15% by weight bentonite | 18 | -- |
| dispersion | | |
| 5% by weight bentonite | -- | 54 |
| dispersion | | |
| Dry latex compound (by weight) | 13.5 | 13.5 |
| Dry bentonite content (by weight) | 2.7 | 2.7 |

| | **Processed Bentonite** | **Unprocessed Bentonite** |
|---|---|---|
| Water content of latex compound | 13.5 | 13.5 |
| Water content of bentonite | 15.3 | 51.3 |
| Total water content | **28.8** | **64.8** |

Owing to the big difference in physical characteristics between dispersions of processed and unprocessed bentonite, it is impossible to measure viscosities of both dispersions with the same type of viscometer. Visual observations show that the 5% unprocessed sample has a thin syrupy appearance, whilst the 15% processed sample has a watery appearance. The difference becomes very marked on processing the samples, i.e. on the addition of dry powders. The latex/bentonite dispersion incorporating the unprocessed bentonite contains over twice the volume of water as that of the latex/bentonite dispersion incorporating the processed bentonite of Example 1 and would then require a considerably extended drying time.

It will be appreciated that the invention is also applicable to synthetic latices. Such latices are prepared by adding water, emulsifying agents, catalyst(s) and one or more monomers or mixtures thereof in a monomer emulsion (usually styrene and butadiene) to a reactor followed by emulsification. Under elevated pressure and elevated temperature, the monomers then react to form a polymer. The polymerised emulsion is then passed through a stripper to remove any unreacted monomer; pH and total solids are adjusted; and antioxidants and stabilisers are added. The present invention embraces the addition of bentonite to a synthetic latex compound before, during or after such a polymerisation step.

## Claims

1. A method for the production of a latex rubber product containing at least 0.5% (by weight) bentonite, the method comprising the steps of:
i) forming an aqueous bentonite electrolytic dispersion by adding bentonite to an aqueous electrolytic solution to form a concentrated aqueous bentonite dispersion of appreciably lower viscosity than a conventional bentonite dispersion;
ii) mixing a latex compound with the aqueous bentonite dispersion, to form a latex/bentonite compound; and
iii) drying the latex/bentonite compound to form said latex rubber product.

2. A method according to Claim 1 wherein an electrolyte comprsied in the electrolytic solution is monovalent, divalent, trivalent or polyvalent.

3. A method according to any preceding claim wherein the bentonite dispersion contains between 5% and 45% by weight of bentonite.

4. A method according to any preceding claim wherein the bentonite dispersion contains 15-20% by weight of bentonite.

5. A method for the production of a latex rubber product containing at least 0.5% by weight bentonite, the method comprising the steps of:
i) mixing a latex compound with a bentonite dispersion to form a latex/bentonite compound; and
ii) drying the latex/bentonite compound to form said latex rubber product.

6. A method according to Claim 5 wherein the bentonite dispersion contains between 0.5% and 5% by weight of bentonite.

7. A method according to Claim 5 wherein the bentonite dispersion contains between 3% and 5% by weight of bentonite.

8. A method according to any preceding Claim wherein between 10% and 90% by weight of the bentonite added has a particle size of less than 0.5 microns.

9. A method according to any preceding claim by weight wherein 70% of the bentonite added has a particle size of less than 0.5 microns.

10. Use of an aqueous bentonite dispersion, to produce a latex rubber product containing between 0.5% and 40% (by weight) bentonite.

11. A latex rubber product including 0.5% to 40% (by weight) bentonite.
